# DEMANDE DE BREVET EUROPEEN

(11) **EP 1 596 286 A2**
(43) Date de publication de la demande: **16.11.2005**
(21) Numéro de dépôt: 05290597.3
(22) Date de dépôt: 17.03.2005
(51) Int. Cl.: G06F 9/38

(54) **Dispositif et procédé de gestion d'un état d'attente d'un microprocesseur**

(30) Priorité: 18.03.2004 FR 0402815
(71) Demandeur: STMicroelectronics S.A., 92120 Montrouge (FR)
(72) Inventeur: Ferrand, Olivier, 13620 Carry Le Rouet (FR); Gril-Maffre, Jean-Michel, 13090 Aix-en-Provence (FR)
(74) Mandataire: Verdure, Stéphane

(57) **Abrégé**

L'invention concerne un microprocesseur (30) comprenant une unité de calcul (32) pour exécuter des opérations respectivement associées à des instructions d'un jeu déterminé d'instructions du microprocesseur et une unité de commande (34) pour interpréter les instructions et commander l'unité de calcul en conséquence. Le microprocesseur comprend en outre une unité de blocage (54) qui est commandée par l'unité de commande en réponse à l'exécution d'une instruction d'attente appartenant audit jeu d'instructions pour placer le microprocesseur dans un état d'attente pendant une durée indéterminée, la sortie du microprocesseur de l'état d'attente étant conditionnée par une valeur déterminée ou un changement déterminé de la valeur d'un bit de condition stocké dans un registre de condition (100) interne ou externe au microprocesseur.

## Description

La présente invention concerne de manière générale la gestion d'un état d'attente d'un microprocesseur.

L'invention concerne plus particulièrement un microprocesseur ainsi qu'un procédé de commande d'un tel microprocesseur pour le placer dans un état d'attente pendant une durée indéterminée.

Dans les microprocesseurs classiques, l'attente d'un événement pour conditionner la sortie du microprocesseur de l'état d'attente peut se faire par deux méthodes distinctes.

La première méthode consiste à attendre le changement de valeur d'un bit d'un registre de statut au moyen d'une boucle logicielle. Néanmoins cette solution présente deux inconvénients.

Un premier inconvénient est que le microprocesseur continue à fonctionner en attendant le changement d'état du bit concerné du registre de statut. Sa consommation est donc du même ordre de grandeur que lors de l'exécution normale d'un programme quelconque alors qu'il ne fait qu'attendre un événement sans effectuer d'opération utile pour l'application.

Un second inconvénient est que plusieurs instructions sont nécessaires pour réaliser cette boucle, dont le nombre dépend du jeu d'instructions du microprocesseur. Le délai entre le changement de la valeur du bit du registre de statut et la sortie de la boucle peut donc être de plusieurs cycles d'horloge. De plus, suivant le moment où le bit change de valeur, le délai entre le changement de valeur du bit et la sortie de la boucle est variable et non prédictible.

Ces deux inconvénients sont particulièrement problématiques dans le cas d'applications très sensibles au temps d'exécution comme celles basées sur un protocole de télécommunication, par exemple.

La seconde méthode consiste à utiliser un mécanisme d'interruption, le microprocesseur pouvant être mis dans l'état d'attente et sortir de cet état d'attente par la génération d'une interruption appropriée. Cette solution permet d'arrêter le microprocesseur et donc de diminuer considérablement sa consommation d'énergie mais elle présente aussi deux inconvénients.

Un premier inconvénient est qu'elle nécessite l'implémentation d'une fonction matérielle dédiée à la génération de l'interruption dans la macro cellule qui doit pouvoir placer le microprocesseur dans l'état d'attente, ainsi que la présence d'une cellule de gestion des interruptions.

Le second inconvénient est que les mécanismes d'interruption sont généralement encore plus lents que la réalisation d'une boucle logicielle car, lorsqu'une interruption est générée, le microprocesseur sauvegarde le contexte d'exécution (valeur des registres et adresse de retour après traitement de l'interruption) dans une mémoire de programme, puis doit restaurer le contexte d'exécution pour continuer l'exécution normale du programme à la fin de l'interruption. Cette restauration représente un temps équivalent à l'exécution de plusieurs instructions.

Pour palier les inconvénients de l'art antérieur précités, la présente invention intègre une instruction spécifique, du jeu d'instructions du microprocesseur, pour arrêter le microprocesseur, la sortie du microprocesseur de l'état d'attente étant conditionnée par la valeur d'un bit déterminé, le bus du microprocesseur étant figé dans un état de lecture du registre stockant ledit bit et le coeur du microprocesseur étant mis en attente.

L'invention propose plus particulièrement un microprocesseur selon la revendication 1.

Dans un premier mode de réalisation, l'instruction d'attente comprend des valeurs spécifiées en paramètres de ladite instruction incluant au moins l'adresse du registre de condition et au moins le rang du bit de condition dans ledit registre de condition. Une seule instruction permet donc de passer en état d'attente et de choisir sur quel bit de registre l'attente va se faire.

Les valeurs spécifiées en paramètres de l'instruction d'attente peuvent en outre inclure la valeur d'un paramètre codant le changement de la valeur du bit de condition qui conditionne la sortie du microprocesseur de l'état d'attente.

Dans un second mode de réalisation, le microprocesseur comprend un registre de mode interne pour stocker la valeur d'un paramètre codant la valeur ou le changement de valeur du bit de condition qui conditionne la sortie du microprocesseur de l'état d'attente.

Dans un troisième mode de réalisation, l'unité de blocage comprend une unité de sélection pour sélectionner, à chaque cycle d'horloge du microprocesseur, le bit de condition parmi les bits du registre de condition lus par le bus en mode lecture.

Dans un quatrième mode de réalisation, l'unité de blocage comprend une unité de surveillance pour tester le bit de condition à chaque cycle d'horloge du microprocesseur. L'unité de surveillance peut délivrer un signal de blocage sur une entrée d'activation et de désactivation d'au moins une unité de traitement des instructions appartenant à l'unité de commande, pour interrompre et bloquer le traitement des instructions afin de placer le microprocesseur dans l'état d'attente. Ainsi, le temps de latence est prédictible et est égal à un cycle d'horloge pour la sortie du microprocesseur de l'état d'attente. Dès que le bit change de valeur, le microprocesseur peut à nouveau exécuter l'instruction suivante au cycle d'horloge suivant.

Dans un mode de réalisation, l'unité de traitement des instructions peut être une unité de récupération qui récupère, à partir d'une mémoire de programme, des instructions à exécuter.

Dans un autre mode de réalisation, l'unité de traitement des instructions peut aussi être un registre d'instruction qui stocke une instruction à exécuter.

Dans un autre mode de réalisation, l'unité de traitement des instructions est un compteur ordinal qui stocke l'adresse d'une prochaine instruction à exécuter.

En général, l'unité de traitement des instructions peut également être une unité de décodage qui décode une instruction à exécuter.

Dans un cinquième mode de réalisation, l'unité de sélection est un multiplexeur comprenant un nombre de données d'entrée égale à la taille en nombre de bits du registre de condition, des entrées d'adressage représentatives du codage du rang du bit de condition dans le registre de condition et une sortie qui délivre la valeur courante du bit de condition à l'unité de surveillance à chaque cycle d'horloge du microprocesseur.

Dans un sixième mode de réalisation, l'unité de surveillance est un multiplexeur comprenant deux entrées complémentaires qui reçoivent respectivement la valeur du bit de condition et son complément logique, une entrée d'adressage qui reçoit une valeur d'un paramètre de transition et une sortie qui délivre le signal de blocage.

En variante, l'unité de surveillance peut être un comparateur comprenant deux entrées qui reçoivent respectivement la valeur du paramètre de transition et la valeur du bit de condition, et une sortie qui délivre le signal de blocage.

Dans une autre variante, l'unité de surveillance peut être une porte XOR inversée comprenant deux entrées qui reçoivent respectivement la valeur du bit de condition et le paramètre de transition, et une sortie qui délivre le signal de blocage.

Avantageusement, l'unité de surveillance peut être sensible à un front de signal pour réagir à un changement de valeur du bit de condition.

L'invention propose également un procédé pour la commande d'un microprocesseur comprenant une unité de calcul pour exécuter des opérations respectivement associées à des instructions d'un jeu d'instructions déterminé du microprocesseur et une unité de commande pour interpréter les instructions et commander l'unité de calcul en conséquence, lequel procédé comprend les étapes suivant lesquelles :
- l'unité de commande active une unité de blocage en réponse à l'exécution d'une instruction d'attente ;
- l'unité de blocage interrompt et bloque le traitement des instructions afin de placer le microprocesseur dans un état d'attente ;
- l'unité de commande configure un bus en lecture d'un registre de condition, pour qu'il délivre à l'unité de blocage des données stockées dans le registre de condition; et,
- l'unité de blocage surveille la valeur ou le changement de la valeur d'un bit de condition du registre de condition qui conditionne la sortie du microprocesseur de l'état d'attente.

Avantageusement, le procédé peut comprendre de plus une étape optionnelle de configuration qui comprend :
- la spécification de l'adresse du registre de condition comme paramètre de l'instruction d'attente ; et,
- la spécification du rang du bit de condition dans le registre de condition comme paramètre de l'instruction d'attente.

Dans une première mise en oeuvre, l'étape de configuration comprend la spécification d'un paramètre de transition comme paramètre de l'instruction d'attente dont la valeur code la valeur ou le changement de valeur du bit de condition qui conditionne la sortie du microprocesseur de l'état d'attente.

Dans une seconde mise en oeuvre, l'étape de configuration comprend en outre la configuration d'un registre de mode interne ou externe au microprocesseur, pour stocker dans ledit registre de mode un paramètre de transition dont la valeur code la valeur ou le changement de la valeur du bit de condition qui conditionne la sortie du microprocesseur de l'état d'attente.

Cette seconde mise en oeuvre est particulièrement intéressante lorsque le microprocesseur présente une architecture RISC (« Reduced Instruction Set Computer » en anglais). En effet, pour les microprocesseurs RISC, les instructions du jeu d'instructions du microprocesseur sont de même taille (en nombre de bits) fixe. Cette contrainte impose de coder un maximum d'informations sur un espace de codage de taille déterminée.

Ainsi, la configuration d'un registre de mode pour stocker le paramètre de transition permet de libérer l'espace mémoire alloué pour le codage du paramètre de transition.

Ledit espace mémoire peut ainsi être utilisé différemment comme par exemple le codage d'une valeur indiquant le nombre de changement du bit de condition avant la sortie du microprocesseur ou autre.

Un avantage de la présente invention est que certaines parties du microprocesseur sont stoppées, ce qui réduit considérablement la consommation d'énergie du microprocesseur. En effet, les unités logiques qui exécutent des opérations ne sont pas sollicitées pendant l'état d'attente et de ce fait ne consomment pas d'énergie.

D'autres particularités et avantages de la présente invention apparaîtront dans la description ci-après d'exemples de réalisation non limitatifs, en référence aux dessins annexés, dans lesquels :
- les figures 1 a et 1b sont des schémas illustrant des exemples de format de codage d'une instruction d'attente selon des modes de réalisation de la présente invention ;
- la figure 2 est un schéma fonctionnel illustrant un mode de réalisation d'un microprocesseur selon la présente invention ;
- la figure 3 est un schéma fonctionnel illustrant un premier mode de réalisation d'une unité de surveillance selon la présente invention ;
- la figure 4 est un schéma fonctionnel illustrant un deuxième mode de réalisation d'une unité de surveillance selon la présente invention ;
- la figure 5 est un schéma fonctionnel illustrant un détecteur de front montant ;
- la figure 6 est un schéma fonctionnel illustrant un détecteur de front descendant ; et
- la figure 7 est un organigramme illustrant une mise en oeuvre du procédé selon l'invention.

Dans ce qui suit, on considère l'exemple d'un microprocesseur 16 bits et présentant une architecture RISC (« Reduced Instruction Set Computer » en anglais), c'est-à-dire un microprocesseur dans lequel la taille en nombre de bits des instructions est fixe et égale à 16 bits.

L'exécution de l'instruction d'attente, qui est une instruction du jeu d'instructions d'un microprocesseur 30, a pour objet de générer un état d'attente du microprocesseur 30 pendant une durée indéterminée qui est fonction d'un changement de valeur d'un bit défini par un utilisateur et stocké dans un registre. Dans la suite de la description, on appelle « bit de condition », le bit dont l'état conditionne la sortie du microprocesseur de l'état d'attente et « registre de condition » 100, le registre qui stocke le bit de condition. Le registre de condition 100 est interne ou externe au microprocesseur.

Plus formellement, le microprocesseur sort de l'état d'attente lorsque la valeur du bit de condition atteint une valeur d'un paramètre de transition également défini par l'utilisateur. Un tel paramètre de transition prend les valeurs binaires « 0 » ou « 1 ».

L'exécution de l'instruction d'attente configure ainsi le conditionnement de la sortie du microprocesseur de l'état d'attente et comprend de ce fait des valeurs spécifiées en paramètre de ladite instruction incluant au moins l'adresse du registre de condition et au moins le rang du bit de condition dans le registre de condition.

En variante, la sortie du microprocesseur 30 de l'état d'attente est conditionnée par la transition du changement de la valeur du bit de condition vers la valeur du paramètre de transition. Plus précisément, la sortie du microprocesseur 30 de l'état d'attente est conditionnée par le front montant de la transition « 0 vers 1 » de l'état du bit de condition ou le front descendant de la transition « 1 vers 0 » de l'état du bit de condition, la transition à détecter étant fonction du paramètre de transition.

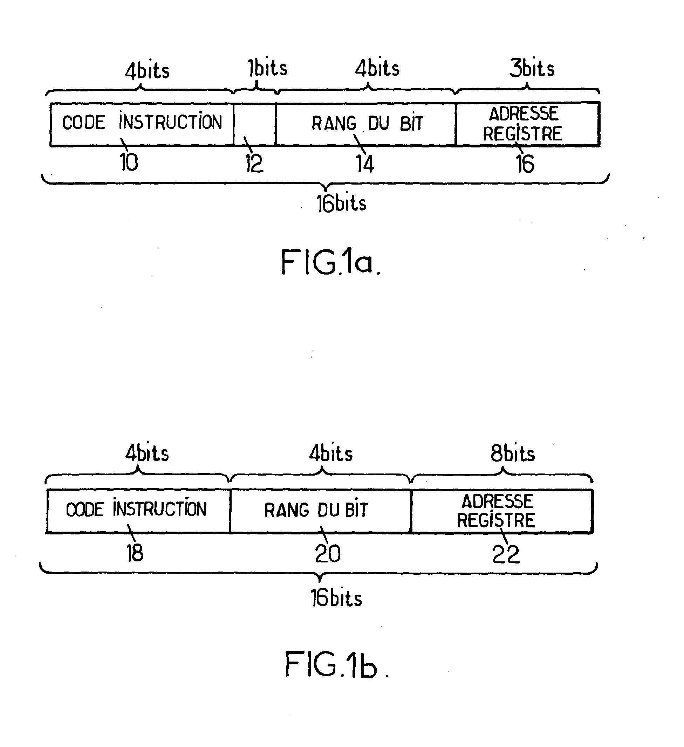

Les figures 1 a et 1b sont de schémas des formats de codage d'une instruction d'attente selon des modes de réalisation de la présente invention.

Dans un premier mode de réalisation, l'instruction d'attente, codée sur 16 bits, comprend quatre champs de données par mis lesquels :
- un premier champ 10 qui contient le code de l'instruction d'attente et qui est codé par exemple sur quatre bits;
- un deuxième champ 12 qui contient la valeur du paramètre de transition et qui est codé par exemple sur un bit ;
- un troisième champ 14 qui contient le rang du bit de condition dans le registre de condition et qui est codé par exemple sur 4 bits ;
- un quatrième champ 16 qui contient l'adresse du registre de condition et qui est codé par exemple sur 3 bits.

Dans un second mode de réalisation, l'instruction d'attente, codée sur 16 bits, comprend trois champs de données parmi lesquels :
- un premier champ 18 qui contient le code de l'instruction d'attente et qui est codé par exemple sur 4 bits ;
- un deuxième champ 20 qui contient le rang du bit de condition dans le registre de condition et qui est codé par exemple sur 4 bits ;
- un troisième champ 22 qui contient l'adresse du registre de condition et qui est codé par exemple sur 8 bits.

Dans le second mode de réalisation, la valeur du paramètre de transition est stockée dans un registre de mode 62 du microprocesseur 30. Le registre de mode est configuré via des instructions appartenant au jeu d'instructions du microprocesseur 30 comme par exemple, une instruction de chargement (« LOAD » en anglais) qui stocke la valeur du paramètre de transition dans un espace mémoire alloué du registre de mode. La valeur du paramètre de condition et l'adresse de l'espace mémoire sont spécifiées en paramètres de l'instruction de chargement.

Bien entendu, la taille en nombre de bits des différents champs, donnée à titre d'exemple pour les deux modes de réalisation précités, n'est pas limitative et peut différer d'un microprocesseur à un autre, notamment en raison de leur architecture différente.

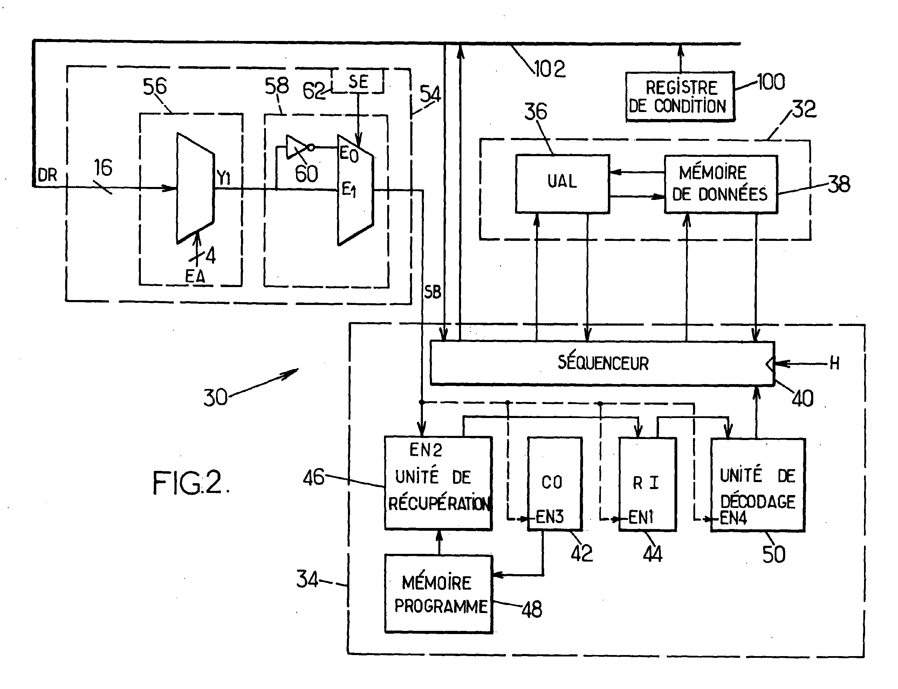

La figure 2 illustre un mode de réalisation d'un microprocesseur 30 selon la présente invention.

Le microprocesseur 30 comprend une unité de calcul 32 (ou unité d'exécution) pour exécuter des opérations associées à des instructions d'un jeu d'instructions du microprocesseur 30, et une unité de commande 34 pour interpréter les instructions et pour commander l'unité de calcul 32 en conséquence, au rythme de cycles d'horloge H.

L'unité de calcul 32 comprend :
- une unité arithmétique et logique 36 (UAL) pour effectuer des opérations élémentaires comme des additions, des multiplications ou autres et qui comprend des unités logiques (non représentées) effectuant les opérations élémentaires comme des additionneurs, des multiplieurs ou autres; et
- une mémoire de données 38, comprenant des mémoires et des registres, qui stocke des données propres aux différentes opérations élémentaires.

L'unité de commande 34 comprend des unités de traitement des instructions, notamment :
- un séquenceur 40 qui génère au rythme des cycles d'horloge H des signaux de commande délivrés aux différentes unités logiques de l'unité de calcul 32 qui participent à l'exécution d'une instruction donnée;
- un compteur ordinal 42 (CO) qui est un registre stockant l'adresse de la prochaine instruction à exécuter ;
- un registre d'instruction 44 (RI) qui reçoit l'instruction à exécuter ;
- une unité de récupération 46 (« fetch unit » en anglais) qui récupère une instruction à exécuter d'un programme à partir d'une mémoire de programme 48 comme par exemple une mémoire de type ROM (« Read Only Memory » en anglais), Flash EPROM (« Electrically Programmable Read/Only Memory » en anglais) ou EEPROM (« Electrically Erasable and Programmable EPROM » en anglais);
- une unité de décodage 50 qui décode et interprète l'instruction à exécuter, et qui détermine les opérations élémentaires à effectuer et les opérandes ; et

L'unité de commande 34 a pour fonction d'interpréter les instructions et de commander les différentes unités logiques de l'unité de calcul 32 en conséquence. De manière plus détaillée elle sert notamment à :
- adresser l'instruction suivante en mémoire de programme ;
- décoder l'instruction suivante une fois qu'elle est chargée dans le registre d'instructions 44 ;
- rechercher les données à traiter, dans la mémoire de programme 48 et/ou dans la mémoire de données 38 ;
- délivrer les données en entrée de l'unité de calcul 32;
- indiquer l'opération que l'unité de calcul 32 doit effectuer ; et,
- transférer éventuellement le(s) résultat(s) de l'opération élémentaire vers la mémoire de données 38.

Le microprocesseur 30 comprend de plus une unité de blocage 54 qui a pour fonction d'interrompre et de bloquer le traitement du jeu d'instructions afin de placer le microprocesseur dans un état d'attente.

L'unité de blocage 54 comprend :
- une unité 56 de sélection qui, à chaque cycle d'horloge du microprocesseur, sélectionne parmi les bits stockés dans le registre de condition le bit de condition et qui délivre la valeur du bit de condition à une unité 58 de surveillance ; et,
- une unité 58 de surveillance pour tester et comparer la valeur du bit de condition par rapport à la valeur du paramètre de transition. L'unité de surveillance 58 délivre un signal de blocage SB vers au moins une unité de traitement des instructions pour interrompre et bloquer le traitement des instructions afin de placer le microprocesseur 30 dans l'état d'attente. Le signal de blocage SB est délivré tant que la valeur du bit de condition est différente de la valeur du paramètre de transition.

Comme décrit précédemment, en variante, l'unité 58 de surveillance est sensible à une transition du changement de la valeur du bit de condition vers la valeur du paramètre de transition, c'est-à-dire qu'elle est sensible à un front montant pour une transition « 0 vers 1 » (c'est-à-dire que le paramètre de transition est égale à « 1 ») ou à un front descendant pour une transition « 1 vers 0 » (c'est-à-dire que le paramètre de transition est égale à « 0 »). Plus formellement, l'unité 58 de surveillance est sensible à un front de signal pour réagir à un changement de valeur du bit de condition.

L'unité de sélection 56 est un multiplexeur, comprenant seize entrées de données DR, quatre entrées d'adresses EA et une sortie Y1. En particulier, les seize entrées de données DR correspondent aux valeurs des seize bits lus dans le registre de condition et les quatre entrées d'adresses EA correspondent au codage du rang du bit de condition dans le registre de condition. La sortie Y1 correspond à la valeur du bit de condition ainsi sélectionné à chaque cycle d'horloge du microprocesseur.

La sélection du bit de condition est fonction des valeurs sur les quatre entrées d'adressage S3, S2, S1, et S0, représentatives du codage binaire du rang du bit de condition dans le registre de condition où, par exemple, S0 est le bit de poids le plus faible et S3 est le bit de poids le plus fort. Par exemple, si on souhaite que la sortie du microprocesseur 30 de l'état d'attente soit conditionnée par le quatrième bit du registre (en partant du bit de poids le plus faible), les quatre entrées d'adresses auront pour valeurs S0 = 0, S1 = 0, S2 = 1 et S3 = 0 soit le nombre « 0100 » en représentation binaire ou le nombre « 4 » en représentation décimale. Une fois le bit de condition sélectionné, le multiplexeur de sélection délivre en sortie Y1 un signal représentatif des valeurs du bit de condition à chaque cycle d'horloge du microprocesseur 30.

L'unité 58 de surveillance est un multiplexeur, comprenant deux entrées de données complémentaires E0 et E1, une entrée d'adressage SE et une sortie Y2 qui délivre le signal de blocage SB. L'une des deux entrées du multiplexeur est reliée à un inverseur 60 afin d'obtenir la complémentarité avec l'autre l'entrée. Par exemple, l'entrée E0 est reliée à l'inverseur 60. L'entrée E1 est reliée à la sortie Y1 du multiplexeur et reçoit donc le signal représentatif des valeurs du bit de condition. L'entrée d'adressage SE du multiplexeur de surveillance correspond à la valeur du paramètre de transition égale à « 0 » ou « 1 ».

Lorsque l'entrée d'adressage SE est égale à « 1 », la sortie Y2 du multiplexeur est égale à la valeur de EO soit « 0 » si la valeur du bit de condition est égale à « 1 », et « 1 » si la valeur du bit de condition est égale à «0».

De même, lorsque l'entrée d'adressage SE est égale à « 0 », la sortie Y2 du multiplexeur est égale à la valeur de E1 soit « 0 » si la valeur du bit de condition est égale à « 0 », et « 1 » si la valeur du bit de condition est égale à « 1 ».

Le signal de blocage SB prend donc la valeur « 1 » quand la valeur du bit de condition est différente de celle du paramètre de transition et prend la valeur « 0 » quand la valeur du bit de condition est égale à celle du paramètre de transition.

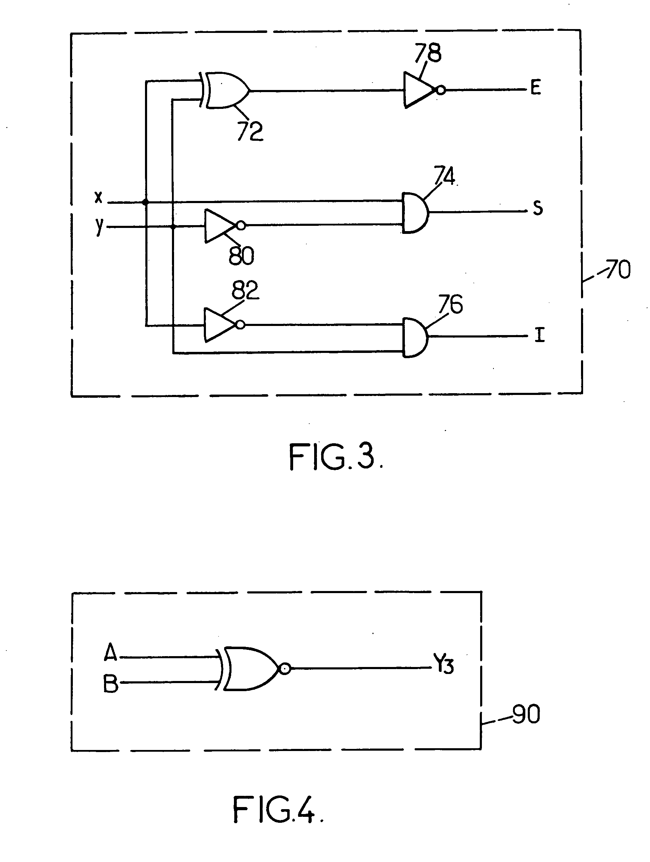

Dans un autre mode de réalisation, l'unité de surveillance 56 est un comparateur à deux entrées x et y, et trois sorties E, S et I comme illustré à la figure 3. Le comparateur comprend plusieurs unités logiques comme une porte 72 de type XOR, deux portes 74 et 76 de type ET, et trois inverseurs 78,80, et 82. La sortie E est représentative de l'égalité des paramètres x et y lorsqu'elle a pour valeur « 1 ». La sortie S indique que le paramètre x est supérieur au paramètre y lorsqu'elle a pour valeur « 1 ». La sortie 1 indique que le paramètre x est inférieur au paramètre y lorsqu'elle a pour valeur « 1 ». Bien entendu, dans le contexte de l'invention, seule la sortie E nous intéresse.

Plus précisément, l'entrée x correspond au paramètre de transition et l'entré y correspond à la valeur du bit de condition. La sortie E délivre donc le signal de blocage SB qui prend la valeur « 1 » lorsque le bit de condition est égale au paramètre de transition et qui prend la valeur « 0 » lorsque le bit de condition est différent du paramètre de transition.

Dans un autre mode de réalisation, l'unité 58 de surveillance est une unité logique telle qu'illustrée sur la figure 4, par exemple une porte 90 de type XOR inversée comprenant deux entrées A et B, et une sortie Y3 qui délivre le signal de blocage SB. L'entrée A correspond à la valeur du bit de condition et l'entrée B correspond au paramètre de transition. Ainsi, le signal de blocage SB a pour valeur « 1 » uniquement si les deux entrées ont mêmes valeurs.

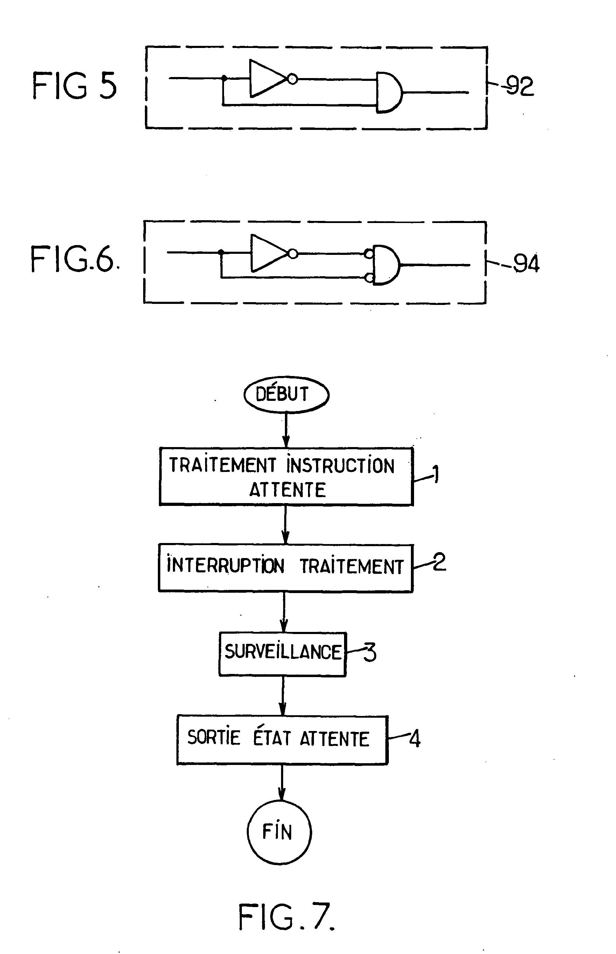

Tel que décrit précédemment dans une variante de réalisation, l'unité de surveillance 58 est sensible aux fronts montants et fronts descendants d'un signal, avec sélectivité du front fonction du paramètre de transition. Pour cela, l'unité de surveillance 58 comprend un détecteur de front montant illustré à la figure 5 et un détecteur de front descendant illustré à la figure 6. Les détecteurs sont reliés, par exemple, en parallèle à l'entrée de l'unité de surveillance qui reçoit le signal représentatif des valeurs du bit de condition.

Ainsi, l'unité de surveillance comprend de plus une unité de sélectivité pour sélectionner un des deux détecteurs en fonction du paramètre de transition. Par exemple, l'unité de sélectivité est un commutateur qui sélectionne le détecteur de front montant lorsque le paramètre de transition est égal à « 1 » et qui sélectionne le détecteur de front descendant lorsque le paramètre de transition est égal à « 0 ». Un tel commutateur est, par exemple, placé en amont des détecteurs.

Dans ce qui suit, on décrit maintenant le fonctionnement de l'unité de blocage 54, en réponse à l'exécution de l'instruction d'attente.

Une fois l'instruction d'attente exécutée, l'unité de commande 34 configure un bus 102 en lecture du registre de condition et active l'unité de blocage 54. Le bus 102 est un bus interne dans le cas où le registre de condition est interne au microprocesseur ou est un bus externe dans le cas où le registre de condition est externe au microprocesseur.

Le bus en mode lecture transmet ensuite les données DR lues du registre de condition, à chaque cycle d'horloge du microprocesseur, à l'unité de sélection 56. En particulier, le bus en mode lecture transmet les seize données DR du registre de condition respectivement aux seize entrées de données du multiplexeur de l'unité de sélection.

L'unité de blocage 54 interrompt et bloque le traitement des instructions. Par exemple, l'unité de blocage 54 bloque le stockage des instructions dans le registre 44 d'instructions. Ainsi, aucune instruction ne sera décodée et exécutée tant que le blocage du registre 44 d'instructions est effectif. Par exemple, le signal de blocage SB est délivré à une entrée EN1 d'activation et de désactivation, dite « entrée ENABLE », dudit registre 44 d'instruction.

Selon d'autres variantes, l'unité de blocage 54 interrompt et bloque le traitement des instructions en désactivant au moins une unité de traitement des instructions comme l'unité 46 de récupération et/ou le compteur 42 ordinal et/ l'unité 50 de décodage. Le signal de blocage SB est ainsi délivré en conséquence sur l'une des entrées EN2, EN3, et EN4 d'activation et de désactivation respectives desdites unités de traitement des instructions.

Lorsque l'unité 58 de surveillance détecte un changement (ou une transition selon la variante décrite) de la valeur du bit de condition, le signal de blocage SB n'est plus délivré et le traitement des instructions reprend son cours normal. Le microprocesseur 30 sort de l'état d'attente au prochain cycle d'horloge suivant le changement de la valeur du bit du condition. En effet, la lecture du registre de condition est effectuée à chaque cycle d'horloge permettant ainsi la sortie du microprocesseur de l'état d'attente dès que la valeur du bit de condition change.

La figure 7 est un organigramme illustrant un mode de mise en oeuvre du procédé selon la présente invention.

Le procédé comprend une première étape optionnelle de paramétrage 1 pour paramétrer l'adresse du registre de condition et le rang du bit de condition à surveiller dans ledit registre. L'adresse et le rang sont des valeurs spécifiées en paramètres de l'instruction d'attente comme illustré à la figure 1 b. Le paramètre de transition est stocké dans un registre de mode en configurant le registre de mode comme il a été décrit précédemment.

En variante, le paramètre de transition est également spécifié en paramètre de l'instruction d'attente tel qu'illustré à la figure 1 a. Cela évite de devoir prévoir et d'utiliser un registre de mode.

Dans une deuxième étape 2 de blocage, l'unité de commande 34 traite, décode et exécute l'instruction d'attente. En réponse à l'exécution de l'instruction, l'unité de commande 34 active l'unité de blocage qui interrompt et bloque le traitement des instructions via le signal de blocage SB délivré à au moins une unité de traitement des instructions, et configure un bus 102 en lecture du registre de condition 100.

Dans une troisième étape 3 de surveillance, le bus 102 en mode lecture délivre les données DR lues dans le registre de condition 100 à l'unité 56 de sélection à chaque cycle d'horloge du microprocesseur 30. L'unité de sélection 56 sélectionne le bit de condition parmi les données DR et délivre les valeurs du bit de sélection à l'unité de surveillance 58 qui surveille la transition « 0 vers 1 » ou « 1 vers 0 » du bit de condition.

Dès qu'une transition de la valeur du bit de condition est détectée, l'unité de blocage 54 ne délivre plus le signal de blocage et autorise, dans une quatrième étape 4, la reprise du traitement des instructions et par conséquent la sortie du microprocesseur de l'état d'attente. L'unité de blocage est ensuite désactivée.

La description qui précède n'est pas limitative et la présente invention s'applique aussi à des microprocesseurs classiques comme les microprocesseurs CISC (« Complex Instruction Set Computer » en anglais) et à des microprocesseurs avec ou sans pipeline d'exécution.

De même, la taille en nombre de bits des instructions traitées par le microprocesseur n'est pas limitative et la présente invention concerne également des instructions de taille en nombre de bits variable ou fixe, et égale par exemple à 8 bits, 16 bits, 32 bits ou plus.

## Revendications

1. Microprocesseur (30) comprenant une unité de calcul (32) pour exécuter des opérations respectivement associées à des instructions d'un jeu déterminé d'instructions du microprocesseur et une unité de commande (34) pour interpréter les instructions et commander l'unité de calcul en conséquence et comprenant une unité de blocage (54) qui est commandée par l'unité de commande en réponse à l'exécution d'une instruction d'attente appartenant audit jeu d'instructions pour placer le microprocesseur dans un état d'attente pendant une durée indéterminée, la sortie du microprocesseur de l'état d'attente étant conditionnée par une valeur déterminée ou un changement déterminé de la valeur d'un bit de condition stocké dans un registre de condition (100) interne ou externe au microprocesseur, l'unité de commande étant adaptée pour configurer un bus (102) en lecture du registre de condition, pour qu'il délivre à l'unité de blocage les données stockées dans ledit registre.

2. Microprocesseur selon la revendication 1, dans lequel l'instruction d'attente comprend des valeurs spécifiées en paramètres de ladite instruction incluant au moins l'adresse du registre de condition et au moins le rang du bit de condition dans ledit registre de condition.

3. Microprocesseur selon la revendication 2, dans lequel les valeurs spécifiées en paramètres de l'instruction d'attente incluent en outre la valeur d'un paramètre codant le changement de la valeur du bit de condition qui conditionne la sortie du microprocesseur de l'état d'attente.

4. Microprocesseur selon la revendication 1 ou la revendication 2, comprenant en outre un registre de mode (62) interne pour stocker la valeur d'un paramètre codant la valeur ou le changement de valeur du bit de condition qui conditionne la sortie du microprocesseur de l'état d'attente.

5. Microprocesseur selon la revendication 1, dans lequel l'unité de blocage comprend une unité de sélection (56) pour sélectionner, à chaque cycle d'horloge du microprocesseur, le bit de condition parmi les bits du registre de condition lus par le bus en mode lecture.

6. Microprocesseur selon la revendication 1, dans lequel l'unité de blocage comprend une unité de surveillance (58) pour tester le bit de condition à chaque cycle d'horloge du microprocesseur.

7. Microprocesseur selon la revendication 6, dans lequel l'unité de surveillance délivre un signal de blocage (SB) sur une entrée d'activation et de désactivation d'au moins une unité de traitement des instructions appartenant à l'unité de commande, pour interrompre et bloquer le traitement des instructions afin de placer le microprocesseur dans l'état d'attente.

8. Microprocesseur selon la revendication 7, dans lequel l'unité de traitement des instructions est une unité de récupération (46) qui récupère, à partir d'une mémoire de programme, des instructions à exécuter.

9. Microprocesseur selon la revendication 7 ou la revendication 8, dans lequel l'unité de traitement des instructions est un registre d'instruction (44) qui stocke une instruction à exécuter.

10. Microprocesseur selon l'une quelconque des revendications 7 à 9, dans lequel l'unité de traitement des instructions est un compteur ordinal (42) qui stocke l'adresse d'une prochaine instruction à exécuter.

11. Microprocesseur selon l'une quelconque des revendications 7 à 10, dans lequel l'unité de traitement des instructions est une unité de décodage (50) qui décode une instruction à exécuter.

12. Microprocesseur selon la revendication 5, dans lequel l'unité de sélection est un multiplexeur comprenant un nombre de données d'entrée égale à la taille en nombre de bits du registre de condition, des entrées d'adressage représentatives du codage du rang du bit de condition dans le registre de condition et une sortie qui délivre la valeur courante du bit de condition à l'unité de surveillance à chaque cycle d'horloge du microprocesseur.

13. Microprocesseur selon la revendication 6, dans lequel l'unité de surveillance est un multiplexeur comprenant deux entrées complémentaires qui reçoivent respectivement la valeur du bit de condition et son complément logique, une entrée d'adressage qui reçoit le paramètre de transition et une sortie qui délivre le signal de blocage (SB).

14. Microprocesseur selon la revendication 6, dans lequel l'unité de surveillance est un comparateur comprenant deux entrées qui reçoivent respectivement la valeur du paramètre de transition et la valeur du bit de condition, et une sortie qui délivre le signal de blocage (SB).

15. Microprocesseur selon la revendication 6, dans lequel l'unité de surveillance est une porte XOR inversée comprenant deux entrées qui reçoivent respectivement la valeur du bit de condition et le paramètre de transition, et une sortie qui délivre le signal de blocage (SB).

16. Microprocesseur selon l'une quelconque des revendications 6 ou 13 à 16, dans lequel l'unité de surveillance est sensible à un front de signal pour réagir à un changement de valeur du bit de condition.

17. Procédé pour la commande d'un microprocesseur (30) comprenant une unité de calcul (32) pour exécuter des opérations respectivement associées à des instructions d'un jeu d'instructions déterminé du microprocesseur et une unité de commande (34) pour interpréter les instructions et commander l'unité de calcul en conséquence, lequel procédé comprend les étapes suivant lesquelles :
- l'unité de commande active une unité de blocage (54) en réponse à l'exécution d'une instruction d'attente ;
- une unité de blocage interrompt et bloque le traitement des instructions afin de placer le microprocesseur dans un état d'attente ;
- l'unité de commande configure un bus (102) en lecture d'un registre de condition (100), pour qu'il délivre à l'unité de blocage des données (DR) stockées dans le registre de condition; et,
- l'unité de blocage surveille la valeur ou le changement de la valeur d'un bit de condition du registre de condition qui conditionne la sortie du microprocesseur de l'état d'attente.

18. Procédé selon la revendication 17 comprenant de plus une étape de configuration qui comprend:
- la spécification de l'adresse du registre de condition comme paramètre de l'instruction d'attente ; et,
- la spécification du rang du bit de condition dans le registre de condition comme paramètre de l'instruction d'attente.

19. Procédé selon la revendication 18, dans lequel l'étape de configuration comprend la spécification d'un paramètre de transition comme paramètre de l'instruction d'attente dont la valeur code la valeur ou le changement de valeur du bit de condition qui conditionne la sortie du microprocesseur de l'état d'attente.

20. Procédé selon la revendication 18, dans lequel l'étape de configuration comprend en outre la configuration d'un registre de mode (62) interne au microprocesseur, pour stocker dans ledit registre de mode stockant un paramètre de transition dont la valeur code la valeur ou le changement de la valeur du bit de condition qui conditionne la sortie du microprocesseur de l'état d'attente.
